# FASCICULE DE BREVET EUROPEEN

(11) **EP 2 374 711 B1**
(45) Date de publication et mention de la délivrance du brevet: **13.02.2013**
(21) Numéro de dépôt: 11290130.1
(22) Date de dépôt: 14.03.2011
(51) Int. Cl.: B63B 27/24, F16L 29/04, F16L 37/08

(54) **Ligne de transfert de fluide à modules de serrage**
Flüssigkeitstransferline mit Spannmodule
Fluid transfer line with serrating modules

(30) Priorité: 09.04.2010 FR 1001500
(43) Date de publication de la demande: 12.10.2011
(73) Titulaire: KSB S.A.S, 92635 Gennevilliers (FR)
(72) Inventeur: Eyquem, Sébastien, 33000 Bordeaux (FR)
(74) Mandataire: Eidelsberg, Victor Albert

(56) Documents cités:
- WO-A1-03/004925
- WO-A2-2007/032842
- FR-A1- 2 572 786

## Description

Le WO 2009/071591 décrit une ligne de transfert de fluide entre deux bâtiments, dont l'un de navigation, comprenant une canalisation flexible cryogénique aérienne en caténaire ayant deux embouts. Les deux embouts sont connectés par un connecteur-déconnecteur, unique sur la ligne, regroupant en une seule interface, qui ont donc une même surface de séparation ou plan de séparation, les dispositifs de connexion-déconnexion de service et de déconnexion d'urgence. Le système de connexion-déconnexion des deux embouts est un collier de serrage dont la cinématique permet une ouverture maîtrisée afin de permettre ensuite la fermeture sans réassemblage manuel, mais qui a l'inconvénient de ne pas avoir de cartouche ressort importante, qui assure une grande force de serrage permettant de reprendre les efforts transmis notamment par les lignes de transfert off-shore, car il serait très difficile de réarmer cette cartouche ressort automatiquement avant une nouvelle fermeture du collier. Un robinet d'isolement à boisseau sphérique est monté à l'extrémité de chaque embout. Ce type de robinet représente une masse importante à l'extrémité de la ligne de transfert, alors que leur forme implique un volume inscrit entre eux deux relativement important, correspondant à la perte de fluide lors d'une déconnexion d'urgence.

L'invention pallie ces inconvénients par une ligne de transfert de fluide entre deux bâtiments du type ci-dessus, caractérisée en ce que :
- les robinets sont des robinets à papillon, qui sont montés respectivement aux extrémités libres en regard des embouts et dont les arbres de manoeuvre sont entraînés par des actionneurs,
- le connecteur-déconnecteur comprend une bride sur l'un des embouts et au moins trois modules de serrage montés sur l'autre embout de manière à pouvoir s'accrocher sur la bride et à s'en décrocher, et
- les arbres de manoeuvre des papillons passent radialement entre deux modules de serrage.

Suivant l'invention, on peut maintenant utiliser des robinets à papillon à double excentration montés très près l'un de l'autre, leurs arbres de manoeuvre étant disposés de manière à ne laisser qu'un volume extrêmement faible entre les papillons, tels que préalablement conçus par les sociétés Eurodim et KSB (WO03/004925).

L'écart entre .les cols des robinets étant trop faible pour y disposer un collier à ouverture et fermeture maîtrisées, les manoeuvres de connexion-déconnexion de service comme d'urgence s'effectuent par des modules de serrage efficaces, les efforts de serrage pouvant être très importants et cela permettant de n'avoir aucune interaction avec les cols des robinets, les modules s'étendant sensiblement parallèlement à l'axe des embouts.

Le nombre de modules de serrage doit être au moins de trois et .doit constituer un bon compromis entre la nécessité d'assurer un effort de serrage le mieux réparti possible avec la bride de l'embout opposé et la nécessité de disposer de suffisamment de place entre deux modules pour permettre le passage des deux cols des robinets intégrant les arbres de manoeuvré. On a obtenu de bons résultats avec de trois à six modules de serrage, de préférence répartis angulairement de manière équidistante autour de l'axe de la canalisation.

Les deux embouts sont pourvus de moyens d'approche et de guidage à éléments mâles et à éléments femelles positionnés sur les deux embouts de manière à ce qu'ils coopèrent entre eux afin d'assurer un bon positionnement d'un embout par rapport à l'autre avant une connexion.

Aux dessins annexés, donnés uniquement à titre d'exemple :
- la Figure 1: est une vue schématique d'une installation de transfert de fluide suivant l'invention ;
- la Figure 2: en est une vue partielle alors que le connecteur-déconnecteur est en position connectée ;
- la Figure 3: en est une vue partielle alors que le connecteur-déconnecteur est en position déconnectée ; et
les Figures 4, 5 et 6 sont des vues en coupe d'un module de serrage.

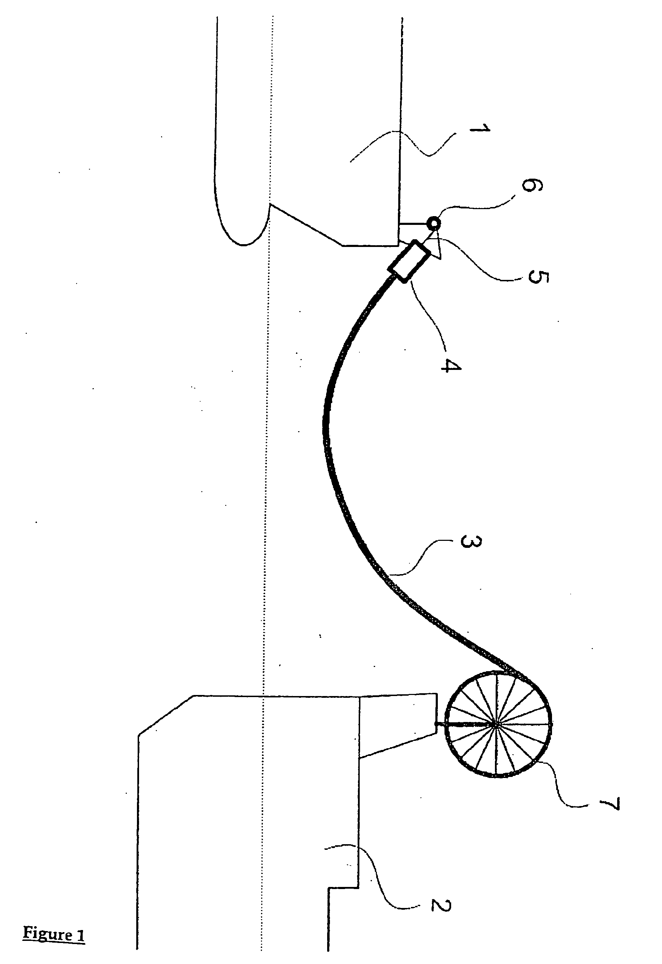

L'installation de transfert de gaz naturel liquéfié entre un méthanier 1 et un terminal flottant 2 qui peut être un poste de déchargement ou un poste de chargement lui-même relié au réseau gaz par des tuyauteries situées sous la mer, comprend une canalisation 3 flexible cryogénique de communication entre les cuves des deux bâtiment 1,2. Le flexible 3 cryogénique aérien en caténaire est déployé et enroulé à l'aide d'une roue 7 et d'un treuil 6 de connexion-déconnexion positionné, par exemple, sur le méthanier 1, treuil qui par l'intermédiaire de son câble 5 de connexion-déconnexion permet le rapprochement ou l'éloignement de ce dernier par rapport au méthanier 1. La Figure 1 présente le système de transfert, un connecteur-déconnecteur 4 assurant la liaison entre les cuves des deux bâtiments 1.2.

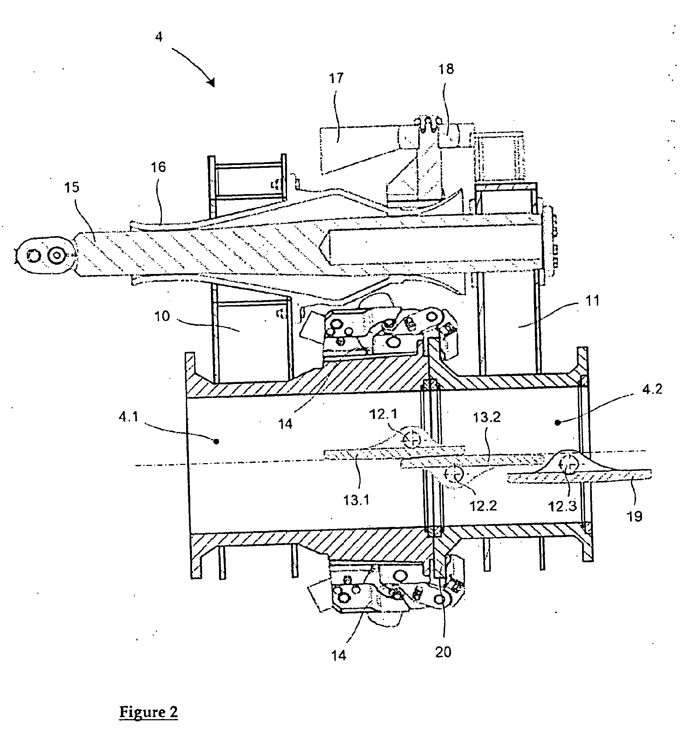

A la Figure 2, la canalisation est composée de deux embouts de tuyauterie rigides, l'embout 4.1, relié au manifold du méthanier 1 par l'intermédiaire d'une pièce d'adaptation, et l'embout 4.2, disposant d'une bride 20 en son extrémité et positionné à l'extrémité du flexible cryogénique. Les modules de serrage 14 visibles sur cette vue (au moins au nombre de trois) positionnés, par exemple, sur l'embout 4.1, permettent la connexion et la déconnexion du système de transfert en fonctionnement de service comme d'urgence en verrouillant et déverrouillant les embouts 4.1 et 4.2 l'un par rapport à l'autre, lesquels supportent respectivement un alésage de guidage 16 et un galet de guidage 18 par l'intermédiaire d'un support 10, et un arbre de guidage 15 servant d'élément mâle ainsi qu'une fourchette de guidage 17 servant d'élément femelle par l'intermédiaire d'un support 11. Des robinets de type papillon 13.1, 13.2 positionnés respectivement sur les embouts 4.1, 4.2, et représentés en position ouverte, permettent l'isolement de ces deux embouts à la suite d'une déconnexion de service ou d'urgence, l'excentration des arbres de manoeuvre 12.1, 12.2 par rapport à l'axe de la veine fluide permettant aux robinets à papillon de se chevaucher lors de leur manoeuvre et donc de limiter au maximum le volume entre les deux en position fermée. Les arbres de manoeuvre 12.1, 12.2 inscrits dans des cols passent radialement aux embouts entre deux modules de serrage 14. Un troisième robinet 19 de type papillon, également représenté en position ouverte, permet de réaliser une double barrière d'étanchéité à l'extrémité du flexible cryogénique aérien 3 à la suite d'une déconnexion du système de transfert, notamment en urgence. La puissance et le débit de l'alimentation hydraulique affectée aux modules de serrage 14 sont suffisamment importants pour assurer respectivement la reprise des efforts dus à la formation d'une couche de givre au niveau des éléments mécaniques et la réalisation d'une déconnexion d'urgence rapide, même si le temps de réponse pour réaliser la déconnexion d'urgence d'un système de transfert avec un flexible en caténaire ne doit pas être nécessairement aussi court qu'avec un bras de chargement, par exemple. Lesdits modules de serrage 14 sont positionnés de telle manière à permettre le passage des arbres de manoeuvré 12.1, 12.2 depuis les embouts respectifs 4.1, 4.2 vers l'actionnement hydraulique, et sont conçus avec une cinématique réalisant un verrouillage mécanique par un système d'arc-boutement, ce qui permet d'accepter une éventuelle perte d'énergie hydraulique sans que cela ne perturbe la connexion et donc le transfert.

Les modules de serrage 14 comme les robinets à papillon 13.1, 13.2 possèdent deux lignes de commande hydraulique distinctes, l'une reliée à l'automate de service pour les fonctions de service, l'autre reliée à l'automate de sécurité pour les fonctions d'urgence (ESD).

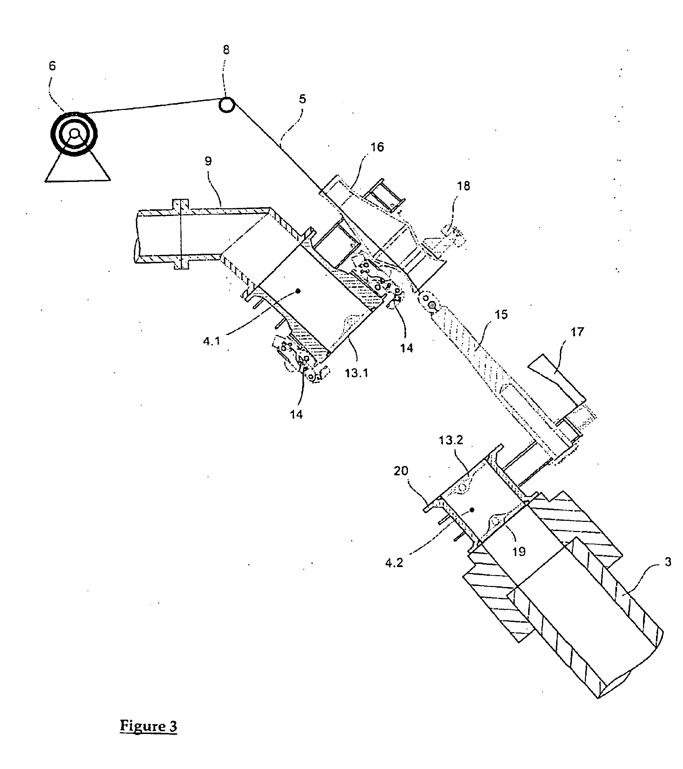

La Figure 3 présente la ligne de transfert en phase de connexion (ou de déconnexion), les robinets à papillon 13.1, 13.2, 19 sont donc représentés en position fermée. Lors d'une déconnexion, l'embout 4.2 fixé sur le flexible cryogénique 3 entre en contact avec l'embout 4.1, relié au manifold du méthanier par l'intermédiaire d'une pièce d'adaptation 9, grâce au câble 5 du treuil de connexion-déconnexion 6 acheminé par la poulie 8 et accroché à l'extrémité de l'arbre de guidage 15 faisant partie intégrante du système de guidage composé également de l'alésage de guidage 16, de la fourchette de guidage 17 ainsi que du galet de guidage 18 qui permettent de réaliser un bon positionnement avant une connexion de service entre les deux embouts 4.1, 4.2. A la suite d'une déconnexion d'urgence, le treuil 6 de connexion-déconnexion assure également la fonction habituelle de frein de chute puisqu'en termes de manoeuvre, cette opération d'urgence est assimilée à une déconnexion de service de par le regroupement des dispositifs correspondants sur le connecteur-déconnecteur 4. Dans le cas d'une procédure de déconnexion d'urgence nécessitant un éloignement important entre les deux bateaux, le câble 5 du treuil de connexion-déconnexion 6 est libéré après être complètement déroulé de manière à éviter tout risque d'arrachement au niveau du système de transfert.

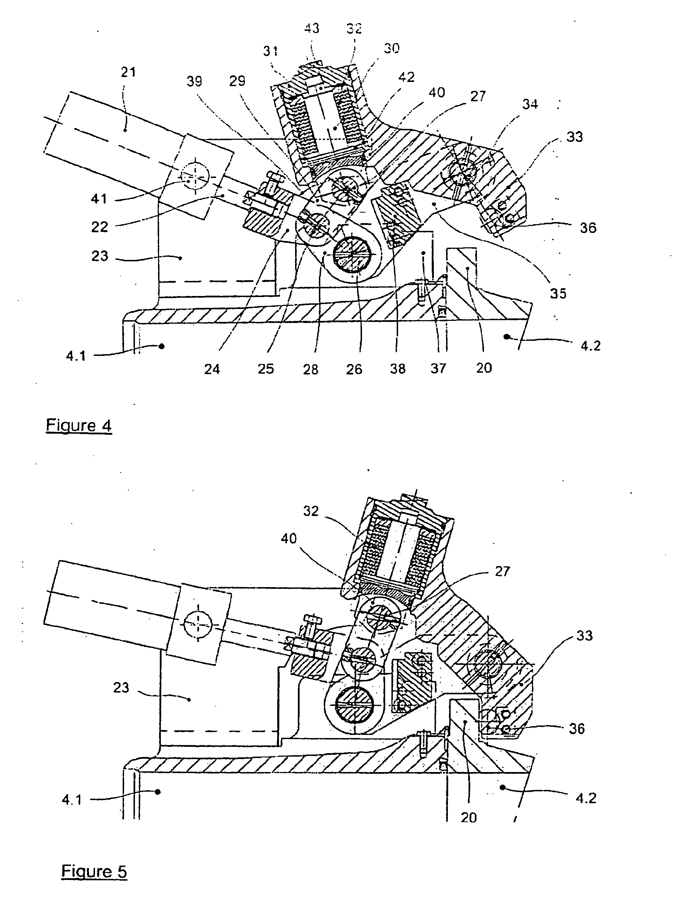

Les Figures 4, 5 et 6 présentent la vue en coupe d'un module de serrage suivant son plan de symétrie. Un vérin 21, en liaison pivot autour de ses tourillons 41 sur le support 23 fixé sur le corps de l'embout 4.1, possède une chape 24 fixée à l'extrémité de sa tige 22. Un axe 25 positionné à l'extrémité de la chape 24 permet de réaliser une liaison pivot avec la bielle 28, également en liaison pivot à son autre extrémité par rapport au corps de l'embout 4.1 autour de l'axe 26, et la bielle 29, également en liaison pivot à son autre extrémité avec le poussoir 30 autour de l'axe 27. Ce poussoir 30, limité dans son déplacement vers le bas par un appui de la partie inférieure de son grand épaulement 42 dans l'alésage interne de la mâchoire 33, est guidé sur sa partie supérieure par le petit épaulement en translation par rapport à la partie supérieure du capot 31 lui-même fixé dans l'alésage de la mâchoire 33 et abritant la cartouche ressort 32 en appui sur le grand alésage du poussoir 30. Une bielle 35, en liaison pivot en une extrémité avec la mâchoire 33 autour de l'axe 34, et de 'l'autre extrémité autour de l'axe 26, possède une butée latérale (non représentée) pouvant entrer en contact avec la partie supérieure de l'ailette 37 de l'embout 4.l, ainsi qu'une butée centrale 38 pouvant entrer en contact avec la mâchoire 33, qui possède en son extrémité des patins 36. L'axe 25 est pourvu de deux galets (non représentés) à chacune de ses extrémités, un petit galet entrant en contact avec les pentes 39, 40 du guide-support 23 et un grand galet pouvant entrer en contact avec la partie supérieure de la bielle 35.

La Figure 4 présente le module de serrage en position ouverte, où la tige 22 du vérin 21 est en position rentrée, alors que la butée centrale 38 est en contact avec la mâchoire 33 ainsi maintenue en position relevée, ce qui permet le rapprochement de l'embout 4.2 vers l'embout 4.1 grâce au système de guidage du connecteur-déconnecteur qui assure la coaxialité et un contact plan sur plan entre les deux embouts.

La fermeture du module est initiée par la sortie de la tige 22 du vérin 21, qui entraîne le déplacement de l'axe 25, de manière à ce que celui-ci tende à s'intercaler entre les axes 26, 27, grâce au maintien en position haute de l'axe 27 permis par le contact entre le grand galet fixé à son extrémité et la partie supérieure de la bielle latérale 35, ce qui provoque également le déplacement vers le haut du poussoir 30 à l'intérieur de l'alésage de la mâchoire 33, entraînant la compression de la cartouche ressort 32, l'inclinaison des pentes 39, 40 du guide-support 23 combinée au contact de la butée latérale de la bielle 35 avec la partie supérieure de l'ailette 37 de l'embout 4.1 tendant à fermer la mâchoire 33 sur la bride 20 de l'embout 4.2.

La Figure 5 présente la position des différents éléments du module lorsque la mâchoire 33 entre en contact par l'intermédiaire de ses patins 36 avec la bride 20 de l'embout 4.2 qui est ainsi serrée contre l'embout 4.1. Dans cette position, le petit galet à l'extrémité de l'axe 27 se situe au niveau de la pente 40 du guide-support 23 alors que la cartouche ressort 32 est comprimée.

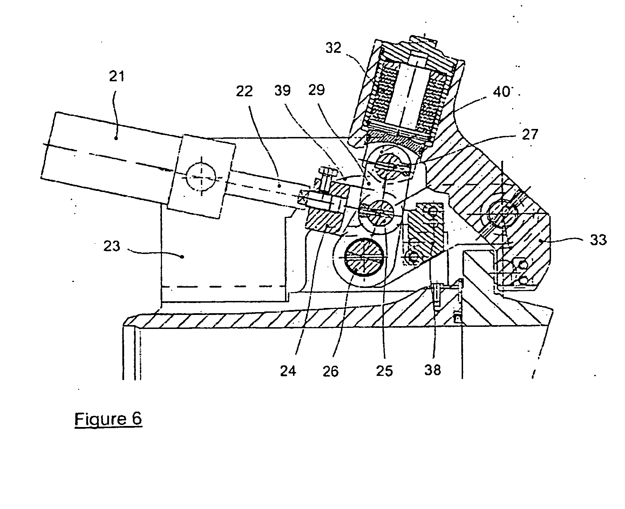

Comme le montre la Figure 6, un déplacement supplémentaire en sortie de la tige 22 du vérin 21 jusqu'au contact de sa chape 24 avec la butée centrale 38 permet à l'axe 25 de passer à la droite du plan passant par les axes 26, 27. La cartouche ressort 32 étant toujours comprimée, la force qu'elle exerce vers le bas suivant son axe central permet de verrouiller mécaniquement la cinématique par arc-boutement, l'axe 25 ne pouvant plus se déplacer à gauche du plan passant par les axes 26, 27 sans l'action du vérin 21, quels que soient les efforts qui sont repris par la mâchoire 33. Durant un transfert, la position verrouillée de la mâchoire est donc assurée même en cas d'un défaut d'alimentation hydraulique notamment au niveau du vérin 21.

La réouverture est donc initiée par la rentrée de la tige 22 du vérin 21 qui provoque le désarc-boutement de la cinématique du système par le déplacement de l'axe 25 à la gauche du plan passant par les axes 26, 27 permis grâce au maintien en position de l'axe 27 par le contact du petit galet fixé à son extrémité contre la pente 40 du guide-support 23. La poursuite de la rentrée de la tige 22 du vérin 21 entraîne, notamment par l'intermédiaire de la bielle 29, le déplacement de l'axe 27 guidé par le contact du petit galet fixé à son extrémité avec la pente 39 ,du guide-support 23, ce qui permet de relever la mâchoire 33. Toute influence de la gravité suivant la position de la mâchoire 33 sur l'embout 4.1 est maîtrisée par le contact du petit galet avec les pentes 29, 30 du guide-support 23.

## Revendications

1. Ligne de transfert de fluide entre deux bâtiments, dont l'un de navigation, comprenant une canalisation (3) flexible aérienne en caténaire ayant deux embouts (4.1, 4.2) connectés par un connecteur-déconnecteur (4), unique sur la ligne, regroupant en une seule interface, qui ont donc la même surface de séparation, les dispositifs de connexion-déconnexion de service et de déconnexion d'urgence, un robinet d'arrêt étant monté dans chaque embout, **caractérisée en ce que** :
- les robinets sont des robinets à papillon (13.1, 13.2), qui sont montés respectivement aux extrémités libres en regard des embouts (4.1, 4.2) et dont les arbres (12.1, 12.2) de manoeuvre sont entraînés par des actionneurs,
- le connecteur-déconnecteur comprend une bride (20) sur l'un des embouts (4.1, 4.2) et au moins trois modules (14) de serrage montés sur l'autre embout de manière à pouvoir s'accrocher sur la bride et à s'en décrocher, et
- les arbres (12.1, 12.2) de manoeuvre des papillons (13.1, 13.2) passent radialement entre deux modules (14) de serrage.

## Claims

1. Line for transfer of fluid between two structures, one of which is a ship, comprising catenary overhead flexible piping (3) with two joining pieces (4.1, 4.2) with free ends and connected by a single connector-disconnector (4) on the line, which groups together into a single interface, such that the joining pieces have the same surface of separation, the service connection-disconnection and emergency disconnection devices, a stop valve being fitted in each joining piece, **characterised in that**:
- the valves are butterfly valves(13.1, 13.2) with manoeuvring shafts (12.1, 12.2), which are fitted respectively at the opposite free ends of the joining pieces (4.1, 4.2), and the manoeuvring shafts (12.1, 12.2) are driven by actuators;
- the connector-disconnector comprises a flange (20) on one of the joining pieces (4.1, 4.2), and at least three clamping modules (14) which are fitted on the other joining piece, such as to be able to be attached to the flange and detached from it; and
- the manoeuvring shafts (12.1, 12.2) of the butterfly valves(13.1, 13.2) pass radially between two clamping modules (14).

## Patentansprüche

1. Leitung für den Fluidtransfer zwischen zwei Bauen, eines davon ein Schiff, umfassend eine flexible, oberirdische, kettenlinienförmige Rohrleitung (3) mit zwei Anschlussstücken (4.1, 4.2), die durch eine - an der Leitung einzige - Verbindungs-/Trennvorrichtung (4) verbunden sind, die an einer einzigen Schnittstelle die Vorrichtungen zur Verbindung/Betriebsunterbrechung und zur Notabschaltung vereint, die also die gleiche Trennfläche haben, wobei ein Absperrventil in jedem Anschlussstück angebracht ist, **dadurch gekennzeichnet, dass**:
- die Ventile Drosselklappenventile (13.1, 13.2) sind, die jeweils an den gegenüberliegenden freien Enden der Anschlussstücke (4.1, 4.2) angebracht sind und deren Betätigungswellen (12.1, 12.2) durch Aktoren angetrieben werden,
- die Verbindungs-/Trennvorrichtung einen Flansch (20) an einem der Anschlussstücke (4.1, 4.2) sowie wenigstens drei an dem anderen Anschlussstück angebrachte Klemmmodule (14) umfasst, um sich an den Flansch ankuppeln zu können und davon zu entkuppeln, und
- die Betätigungswellen (12.1, 12.2) der Drosselklappen (13.1, 13.2) radial zwischen zwei Klemmmodulen (14) durchlaufen.
